# EUROPÄISCHE PATENTSCHRIFT

(11) **EP 1 869 111 B1**
(45) Veröffentlichungstag und Bekanntmachung des Hinweises auf die Patenterteilung: **05.09.2012**
(21) Anmeldenummer: 06725580.2
(22) Anmeldetag: 05.04.2006
(51) Int. Cl.: C08J 9/00, C08K 5/00, C08K 5/19, C08K 5/42

(54) **VERFAHREN ZUR ANTISTATISCHEN AUSRÜSTUNG VON EXPANDIERBAREM POLYSTYROL**
METHOD FOR EQUIPPING EXPANSIBLE POLYSTYRENE WITH ANTISTATIC PROPERTIES
PROCEDE PERMETTANT DE CONFERER DES PROPRIETES ANTISTATIQUES A DU POLYSTYRENE EXPANSIBLE

(30) Priorität: 06.04.2005 DE 102005015892
(43) Veröffentlichungstag der Anmeldung: 26.12.2007
(73) Patentinhaber: BASF SE, 67056 Ludwigshafen (DE)
(72) Erfinder: ALLMENDINGER, Markus, 67480 Edenkoben (DE); HAHN, Klaus, 67281 Kirchheim (DE); RUCH, Joachim, 67157 Wachenheim (DE); SCHMIED, Bernhard, 67227 Frankenthal (DE); HOLOCH, Jan, 69181 Leimen (DE)
(86) Internationale Anmeldenummer: PCT/EP2006/061350
(87) Internationale Veröffentlichungsnummer: WO 2006/106121

(56) Entgegenhaltungen:
- EP-A- 0 289 321
- EP-A- 0 965 426
- GB-A- 1 044 973

## Beschreibung

Die Erfindung betrifft ein Verfahren zur Herstellung von antistatisch ausgerüsteten, expandierbaren Styrolpolymerisaten.

Um die störungsfreie Förderung von expandierbarem Polystyrol (EPS) zu ermöglichen und die elektrostatische Aufladung der vorgeschäumten Polystyrolschaumpartikel zu vermindern wird in der Regel eine Beschichtung der EPS-Partikel mit einem Antistatika verwendet. Die Sicherstellung der Antistatikausrüstung von EPS Granulat stellt immer wieder ein Problem dar, da ein Abrieb bzw. eine Abwaschung des Beschichtungsmittels von.der Oberfläche der Granlulate, insbesondere auch beim Vorschäum-Vorgang nicht auszuschließen. Dies wiederum führt zu nicht zufriedenstellenden antistatischen Eigenschaften.

Aufgabe der vorliegenden Erfindung war es daher, ein Verfahren zur Herstellung von antistatisch ausgerüsteten expandierbaren Styrolpolymerisaten zu finden, das auch bei Abrieb und nach dem Vorschäumen eine zufriedenstellende Antistatikausrüstung behält.

Demgemäss wurde ein Verfahren zur Herstellung von antistatisch ausgerüsteten, expandierbaren Styrolpolymerisaten, gefunden, wobei man zu einer Styrolpolymerschmelze 0,05 bis 6 Gew.-% eines Antistatikums und ein Treibmittel zumischt, durch eine Düse extrudiert und granuliert.

Bevorzugt mischt man der Styrolpolymerschmelze 0,1 bis 4 Gew.-% des Antistatikums zu.

Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Die treibmittelhaltige Styrolpolymerschmelze enthält in der Regel eine oder mehrere Treibmittel in homogener Verteilung in einem Anteil von insgesamt 2 bis 10 Gew.-%, bevorzugt 3 bis 7 Gew.-%, bezogen auf die treibmittelhaltige Styrolpolymerschmelze.

Geeignete Verfahren zur Herstellung der treibmittelhaligen Schmelze, Extrusion und Granulierung sind beispielsweise in WO 03/06544 beschrieben.

EP 0289321 A2 offenbart ein Verfahren zur Herstellung von antistatisch ausgerüsteten, expandierbaren Styrolpolymerisaten, indem Polystyrolteilchen mit einer Mischung aus Antistatikum und Treibmittel überzogen werden.

Als Antistatikum können die in der Technik üblichen und gebräuchlichen Substanzen verwendet werden. Beispiele sind N,N-Bis(2-hydroxyethyl)-C₁₂-C₁₈-alkylamine, Fettsäu-rediethanolamide, Cholinesterchloride von Fettsäuren, C₁₂-C₂₀-Alkylsulfonate, Ammoniumsalze usw.

Geeignete Ammoniumsalze enthalten am Stickstoff neben Alkylgruppen 1 bis 3 hydroxylgruppenhaltige organische Reste.

Geeignete quaternäre Ammoniumsalze sind beispielsweise solche, die am Stickstoff-Kation 1 bis 3, vorzugsweise 2, gleiche oder verschiedene Alkylreste mit 1 bis 12, vorzugsweise 1 bis 10 C-Atomen, und 1 bis 3, vorzugsweise 2 gleiche oder verschiedene Hydroxyalkyl- oder Hydroxyalkylpolyoxyalkylen-Reste gebunden enthalten, mit einem beliebigen Anion, wie Chlorid, Bromid, Acetat, Methylsulfat oder p-Toluolsulfonat.

Die Hydroxyalkyl- und Hydroxyalkyl-polyoxyalkylen-Reste sind solche, die durch Oxyalkylierung eines Stickstoff-gebundenen Wasserstoffatoms entstehen und leiten sich von 1 bis 10 Oxyalkylenresten, insbesondere Oxyethylen- und Oxypropylen-Resten ab.

Besonders bevorzugt wird als Antistatikum ein quartäres Ammmoniumsalz oder ein Alkalisalz, insbesondere Natriumsalz eines C₁₂-C₂₀ Alkansulfonats, z. B Emulgator K30 von Bayer AG, oder Mischungen davon eingesetzt. Die Antistatika können in der Regel sowohl als Reinsubstanz als auch in Form einer wässrigen Lösung zugegeben werden. Es ist auch möglich, dass man nach dem Granulieren auf das Granulat zusätzlich eine ein Antistatikum enthaltende Beschichtung aufbringt.

Durch Phasenseparation diffundieren die Antistatika nach und nach an die Oberfläche der EPS-Granulate und sorgen hier in Verbindung mit der Restfeuchte des Granulats und/oder der Luftfeuchtigkeit für eine zuverlässige Antistatik-Ausrüstung der EPS-Granulate.

Die nach dem erfindungsgemäßen Verfahren erhaltenen expandierbaren Styrolpolymerisate weisen aufgrund der kontinuierlichen Diffusion des Antistatikums aus dem Granulat an die Oberfläche eine zuverlässige Antistatikausstattung auf, die sich auch nach eventueller Abwaschung wieder regenerieren kann. So lässt sich auch die oftmals nicht zufriedenstellende Antistatikausrüstung nach dem Vorschäumen verbessern.

### Beispiele:

### Beispiel 1 bis 3 und Vergleichsversuche V1 und V2

In eine Polystyrolschmelze aus PS 148G der BASF Aktiengesellschaft mit einer Viskositätszahl VZ von 83 ml/g (Mw = 220.000 g/mol, Uneinheitlichkeit Mw/Mn = 2,8) wurde die in Tabelle 1 angegebenen Menge eines Gemisches aus überwiegend sekundären Natriumalkansulfonaten mit eine mittleren Kettenlänge von C-15 (Emulgator K30 der Bayer AG) als Antistatikum und 7 Gew.-% n-Pentan als Treibmittel eingemischt.
Die treibmittelhaltige Schmelzemischung wurde im Kühler von ursprünglich 260 auf 190 °C abgekühlt und bei einem Durchsatz von 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.

Die erhaltenen Granulate wurden mit einer Beschichtungsmischung aus Glycerinmonostearat, Glycerintristearat, feinteiliger Kieselsäure Aerosil R972, Zn-Stearat und Antistatikum Emulgator K30 (200 ppm bezogen auf EPS-Granulat) beschichtet.

Anschließend wurden die Granulate in strömendem Wasserdampf zu Schaumstoffperlen (18 g/l) vorgeschäumt, 24 Stunden zwischengelagert und anschließend in gasdichten Formen mit Wasserdampf zu Schaumstoffkörpern verschweißt.

Die Antistatikausrüstung wurde über den Oberflächenwiderstand vor und ca. 60 Minuten nach Abwaschen der Beschichtung mit Wasser und anschließendem Trocknen geprüft und bewertet (+: zufriedenstellend; -: nicht zufriedenstellend)

### Beispiel 4

Beispiel 1 wurde wiederholt mit dem Unterschied, dass als Antistatikum 4 Gew.-% Cesa-stat 3301 (Fa. Clariant) in die Polystyrolschmelze eingemischt wurde.

### Vergleichsversuch V1

Beispiel 1 wurde wiederholt mit dem Unterschied, dass kein Antistatikum in die Polystyrolschmelze eingemischt wurde, sondern nur das Antistatikum Emulgator K 30 über die Beschichtung aufgebracht wurde.

**Tabelle1: Antistatikausrüstung der EPS Granulate**

| Beispiel | Antistatikum [Gew.-%] eingemischt | Antistatikausrüstung nach Beschichtung | Antistatikausrüstung nach Abwaschen |
|---|---|---|---|
| 1 | 0,5 K 30 | + | + |
| 2 | 1,5 K 30 | + | + |
| 3 | 1,0 K 30 | + | + |
| 4 | 4,0 Cesa-stat 3301 | + | + |
| V1 | 0 | + | - |

## Patentansprüche

1. Verfahren zur Herstellung von antistatisch ausgerüsteten, expandierbaren Styrolpolymerisaten, **dadurch gekennzeichnet, dass** man zu einer Styrolpolymerschmelze 0,05 bis 6 Gew.-% eines Antistatikums und ein Treibmittel zumischt, durch eine Düse extrudiert und granuliert.

2. Verfahren nach Anspruch 1, **dadurch gekennzeichnet, dass** man der Styrolpolymerschmelze 0,1 bis 4 Gew.-% eines Antistatikums zumischt.

3. Verfahren nach Anspruch 1 oder 2, **dadurch gekennzeichnet, dass** man ein quartäres Ammoniumsalz als Antistatikum einsetzt.

4. Verfahren nach Anspruch 1 oder 2, **dadurch gekennzeichnet, dass** man das Alkalisalz eines C₁₂-C₂₀ Alkansulfonat einsetzt.

5. Verfahren nach einem der Ansprüche 1 bis 4, **dadurch gekennzeichnet, dass** man nach dem Granulieren auf das Granulat zusätzlich eine ein Antistatikum enthaltende Beschichtung aufbringt.

6. Antistatisch ausgerüstetes, expandierbares Styrolpolymerisat, erhältlich nach einem der Ansprüche 1 bis 4.

## Claims

1. A process for producing antistatically treated, expandable styrene polymers, which comprises admixing a styrene polymer melt with from 0.05 to 6% by weight of an antistatic and a blowing agent, extruding it through a die and pelletizing it.

2. The process according to claim 1, wherein the styrene polymer melt is admixed with from 0.1 to 4% by weight of an antistatic.

3. The process according to claim 1 or 2, wherein a quaternary ammonium salt is used as antistatic.

4. The process according to claim 1 or 2, wherein the alkali metal salt of a C₁₂-C₂₀-alkane sulfonate is used.

5. The process according to any of claims 1 to 4, wherein a coating comprising an antistatic is additionally applied to the pellets after pelletization.

6. An antistatically treated, expandable styrene polymer obtainable according to any of claims 1 to 4.

## Revendications

1. Procédé pour la production de polymérisats de styrène expansibles, à traitement antistatique, **caractérisé en ce qu'**on incorpore un agent d'expansion et 0,05 à 6 % en poids d'un agent antistatique à une masse fondue de polymère de styrène, on l'extrude à travers une buse et on la granule.

2. Procédé selon la revendication 1, **caractérisé en ce qu'**on incorpore 0,1 à 4 % en poids d'un agent antistatique à la masse fondue de polymère de styrène.

3. Procédé selon la revendication 1 ou 2, **caractérisé en ce qu'**on utilise comme agent antistatique un sel d'ammonium quaternaire.

4. Procédé selon la revendication 1 ou 2, **caractérisé en ce qu'**on utilise le sel alcalin d'un alcane(C₁₂-C₂₀)sulfonate.

5. Procédé selon l'une quelconque des revendications 1 à 4, **caractérisé en ce qu'**après la granulation on applique en plus sur le produit granulé un revêtement contenant un agent antistatique.

6. Polymérisat de styrène expansible, à traitement antistatique, pouvant être obtenu selon l'une quelconque des revendications 1 à 4.
